# EUROPEAN PATENT SPECIFICATION

(11) **EP 1 207 212 B1**
(45) Date of publication and mention of the grant of the patent: **29.09.2010**
(21) Application number: 01309670.6
(22) Date of filing: 16.11.2001
(51) Int. Cl.: C22C 19/00, C22C 19/05

(54) **Nickel alloy composition**
Nickel - Legierung
Alliage de nickel

(30) Priority: 18.11.2000 GB 0028215
(43) Date of publication of application: 22.05.2002
(73) Proprietor: ROLLS-ROYCE PLC, London, SW1E 6AT (GB)
(72) Inventor: Shipton, Mark Henry, Kingswood, Bristol BS15 1XJ (GB); Broomfield, Robert Walter, Bristol BS34 7QE (GB)
(74) Representative: Brown, David Leslie

(56) References cited:
- EP-A- 0 194 391
- EP-A- 0 207 874
- EP-A- 0 577 316
- GB-A- 2 235 697
- US-A- 5 622 638

## Description

### Field of the Invention

The present invention relates to a nickel alloy composition. In particular, the invention relates to a nickel alloy composition for application to the tips of gas turbine blades to act as an oxidation and corrosion resistant barrier.

### Background of the Invention

US Patent No. 5,622,638 describes a nickel-based alloy composition for application to the tips of gas turbine blades (which are conventionally formed from a nickel-based superalloy) to act as an oxidation and corrosion resistant barrier, most particularly a high temperature oxidation and corrosion resistant barrier. The nickel-based alloy composition consists essentially of about 14 to about 18 wt% Cr, about 6.45 to about 6.95 wt% Al, about 9.75 to about 11.45 wt% Co, about 5.95 to about 6.55 wt% Ta, about 1.85 to about 2.35 wt% Re, about 0.05 to about 1.75 wt% Hf, about 0.006 to about 0.03 wt% Zr, about 0.02 to about 0.11 wt% C, up to about 1.1 wt% Si, and up to about 0.01 wt% B, with the balance being nickel and typical impurities. In one embodiment, illustrated in Figures 8 to 10 of the prior art, the alloy can be deposited by a known laser deposition process to provide a so-called squealer (38), being a wall extending from the blade tip (12) and enclosing a tip well. The bottom of the tip well is defined by the surface of the blade tip (12).

It is an object of the present invention to provide an improved or at least alternative nickel-based alloy composition, suitable for application to the tips of gas turbine blades to act as an oxidation and corrosion resistant barrier.

### Summary of the Invention

According to a first aspect of the present invention, there is provided a nickel alloy composition consisting of 4 to 8 (e.g. 4.5 to 6.5) wt% Cr, 5 to 6.5 (e.g. 5.5 to 6.2) wt% Al, 2 to 6 (e.g. 3 to 4) wt% Co, 4 to 8 (e.g. 5 to 7) wt% Ta, 3 to 5 (e.g. 3.5 to 4.5) wt% Re, 0.1 to 0.5 (e.g. 0.1 to 0.2) wt% Hf, 0.04 to 0.1 (e.g. 0.04 to 0.06) wt% C, 0.05 to 0.3 (e.g. 0.05 to 0.15) wt% Si, 0.003 to 0.01 (e.g. 0.003 to 0.007) wt% B, 0.003 to 0.008 wt% La, 0.003 to 0.008 wt% Y and optionally one or more of: up to 5wt% W, up to 5wt% Pt, the balance being nickel and incidental impurities and excluding all of Mo, Ti, V and Nb.

The nickel alloy composition of the present invention excludes Mo, Ti, V and Nb. These elements are found generally to harm the resistance of the alloy to high temperature oxidation and corrosion.

It is preferred that the nickel alloy composition of the present invention further includes one or more additional element selected from up to 5 (e.g. 1 to 3) wt% W, up to 5 (e.g. up to 1) wt% Pt. It is particularly preferred that the nickel alloy composition of the present invention includes 0.003 to 0.005 wt% La, and 0.003 to 0.005 wt% Y.

Still more preferably, the nickel alloy composition consists essentially of Cr, Al, Co, Ta, Re, Hf, C, Si, B La and Y and also one or more of W and Pt in the amounts stated above, the balance being nickel. It is most preferred that La and Y should be present in approximately equal amounts. The expression "consists essentially of" is to be understood as allowing for the presence of typical impurities, in addition to the stated elements.

In one embodiment of the present invention, the nickel alloy composition has the nominal composition Cr (4.5 wt%), Al (6 wt%), Co (4 wt%), Ta (6 wt%), Re (4 wt%), Hf (0.15 wt%), C (0.05 wt%), Si (0.1 wt%), B (0.005 wt%), W (2 wt%), La (0.003-0.005 wt%), and Y (0.003 - 0.005 wt%), the remainder being nickel. Nickel alloy compositions substantially corresponding to the "nominal composition" set out above are also included within that definition.

The nickel alloy composition of the present invention preferably comprises about 50% gamma prime volume fraction at room temperature and a gamma prime solvus of between about 1265 and about 1280 deg. C. In alloys where Ti is excluded, the gamma prime regions will consist of Ni₃(Al,Ta).

The nickel alloy composition of the present invention preferably has, at elevated temperatures above about 800 deg. C, at least half the creep and the tensile and low cycle fatigue (LCF) strengths of conventional nickel-based superalloys (e.g. CMSX-4) from which gas turbine blades are typically cast, without substantially sacrificing oxidation and corrosion resistance, and more particularly high temperature oxidation and corrosion resistance.

Cyclic oxidation tests carried out on samples of the nickel alloy composition of the present invention at 1200 deg. C show that the preferred alloy composition has excellent high temperature oxidation resistance, and in particular a broad front oxidation rate approximately 20% of the oxidation rate of CMSX-4.

The nickel alloy composition of the present invention may be provided in any suitable physical form for application to the tip of the gas turbine blade. As discussed below, it may be convenient in certain circumstances for the alloy composition to be provided in, for example, a physical form selected from powders, foils, rods and wires. Powders for use in a laser welding process may conveniently have a particle size range of +45/-140um.

According to a second aspect of the present invention, there is provided the use of the nickel alloy composition of the present invention, for forming a blade tip of a gas turbine blade, particularly a blade tip of a gas turbine propulsion engine, to act as an oxidation and corrosion resistant barrier and optionally to provide the tip with rub tolerance.

According to a third aspect of the present invention, there is provided a method for forming a blade tip of a gas turbine blade, particularly a blade tip of a gas turbine propulsion engine, the method comprising applying the nickel alloy composition of the first aspect of the present invention to the tip (i.e. the radially outermost portion) of the gas turbine blade.

The formed blade tip may comprise a blade tip structure such as, for example, a squealer. The nickel alloy composition may be initially applied to a depth in excess of the desired alloy depth of the final formed blade tip or blade tip structure, and the applied nickel alloy composition subsequently machined to reduce the depth thereof to form the desired blade tip or blade tip structure.

In the method, the step of applying the alloy composition to the tip of the gas turbine blade may preferably be accomplished by fusing the alloy composition onto the blade tip, preferably under controlled conditions whereby the desired configuration of the blade tip is achieved after cooling of the fused mass of the alloy composition. The step of applying the alloy composition to the tip of the blade is preferably carried out by means of a laser cladding process or by weld deposition process.

In the laser cladding process, the nickel alloy composition is provided initially in the form of a powder and is applied (e.g. as a layer) to the tip of the gas turbine blade by fusing the powder alloy to the tip of the gas turbine blade. A laser beam is directed at the selected superalloy surface of the gas turbine blade, and the finely divided nickel alloy powder according to the first aspect of the present invention is fed directly into the laser beam impingement zone. The energy density of the laser beam is sufficient to melt the nickel alloy powder, causing the powder particles to fuse to the superalloy surface of the gas turbine blade and to each other, thereby forming a homogeneous layer of relatively high density. Effectively, the particles of the nickel alloy powder are sintered to the blade surface to provide the required barrier layer. For further details of the laser cladding process, which may be used to apply the nickel alloy composition to a wide range of metal components in addition to gas turbine blades, please refer to US Patents Nos. 4,804,815 and 5,160,822.

The laser cladding process is particularly shape-faithful, making available shaping accuracies of +/- 0.04mm in the laying down of the alloy of the present invention. Where the configuration of the final form is critical, laser cladding may be preferred for this reason, as it can lead to savings of time and money in subsequent machining and other post-processing stages.

In the weld deposition process, the nickel alloy composition is initially provided in any convenient physical form, for example in rod or wire form, and is applied to the tip of the gas turbine blade by feeding the alloy composition into a plume or arc of a welding torch and onto the surface of the blade tip. In this process, the nickel alloy composition is fused to the blade surface to provide the required barrier layer.

The deposited nickel alloy layer provides a high integrity treatment for the tips of turbine blades, e.g. shroudless turbine blades, in a gas turbine, and in particular in a gas turbine propulsion engine.

The method for forming a blade tip, according to the present invention, may alternatively comprise a repair method for repairing damage to a metal article such as a cast metal turbine component, more particularly a turbine blade, a turbine shroud segment or a nozzle guide vane.

According to a fourth aspect of the present invention, there is provided a method for repairing a metal article such as, for example, a cast metal turbine component (e.g. a turbine blade, a turbine shroud segment or a nozzle guide vane), the method comprising applying the nickel alloy composition of the first aspect of the invention to a damaged portion of the metal article to repair the same. Essentially the same processes as described herein with reference to the formation of blade tips or blade tip structures on gas turbine blades may be used in the method for repairing a metal article such as, for example, a cast metal turbine component. Instead of forming a blade tip or blade tip structure, with optional machining of the unfinished tip or structure to the final desired configuration, however, in the repair method the alloy composition of the present invention will be applied to the metal article to form initially a repair structure, which is typically subsequently machined to arrive at the final desired repaired configuration.

### Brief Description of the Drawings

The present invention will now be described in greater detail, but without limitation, with reference to the accompanying drawings, in which:
Figure 1 shows in perspective view a turbine blade of a gas turbine propulsion engine, provided with a squealer tip formed from an alloy of the present invention;
Figure 2 shows an enlarged perspective view of the tip portion of the blade of Figure 1, immediately after initial laying down of the unfinished form of the squealer wall, indicating also the path followed by the laser cladding apparatus during that initial laying down process;
Figure 3 shows the blade of Figure 1 in a laser cladding apparatus during the initial laying down of the alloy of the present invention for formation of the blade tip; and
Figure 4 shows a vertical cross-sectional view through the tip wall of the blade of Figure 1, after machining to form the finished squealer wall profile.

### Detailed Description of the Drawings

Referring to the drawings, in which like parts are designated alike, a turbine blade 1 of a gas turbine propulsion engine has a geometry which is generally conventional in the art. The blade 1 has a root 2 and a tip 3, the tip 3 being provided with a squealer comprising a peripheral wall 4. The squealer serves in operation to enclose a body of relatively cool air at the tip of the blade in the tip well bounded by the wall 4. Holes (not shown) in the tip of the blade provide for air flow communication between hollow chambers within the blade and the said body of relatively cool air.

The blade is preferably formed from a suitable high temperature material, such as an appropriate nickel-based superalloy of a type known in the art, and may be cast as single crystal or directionally solidified casting to promote the high temperature properties of the blade 1.

The wall 4 of the squealer tip is formed using the novel nickel alloy composition of the first aspect of the invention. A representative composition of the alloy composition is substantially as follows: Cr (4.5 wt%), Al (6 wt%), Co (4 wt%), Ta (6 wt%), Re (4 wt%), Hf (0.15 wt%), C (0.05 wt%), Si (0.1 wt%), B (0.005 wt%), W (2 wt%), La (0.003-0.005 wt%), and Y (0.003 - 0.005 wt%), the remainder being nickel.

For carrying out the process and use of the present invention, the alloy composition is first formed by a conventional alloying process, as will be well within the abilities of one of ordinary skill in the art. The alloy composition is suitably initially prepared as an ingot, from with any desired physical form for the blade tip formation can be formed by conventional methods.

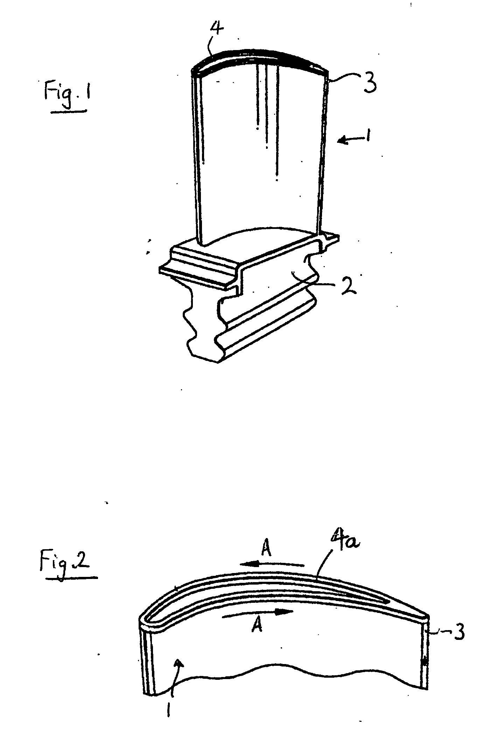

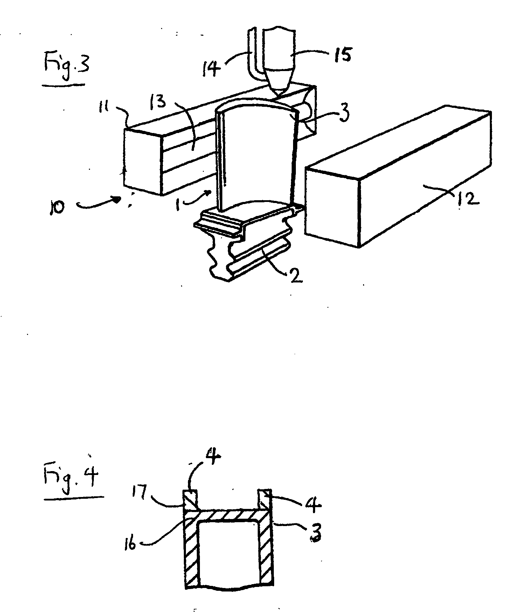

In the illustrated process for forming the blade tip 3 of the gas turbine blade 1, a laser cladding process is employed for the initial laying down of the alloy composition, as illustrated more particularly in Figures 2 and 3 of the drawings.

Referring to Figure 3, the tip 3 of the blade 1 is arranged under a conventional laser cladding apparatus 10, such as, for example, a Sulzer Metco laser welding apparatus available from Sulzer Metco Holding AG (Wohlen, Switzerland; web: www.sulzermetco.com; tel: +41 56 618 8181). The apparatus includes lateral preheat boxes 11,12, each of which includes a quartz heating lamp 13, and an alloy powder feed line 14 extending from the powder feed system (not shown) to the laser beam tube 15. The laser beam tube 15 directs a laser beam to the blade tip 3. The alloy powder (suitably having a particle size range +45/-140um) enters the laser beam in close proximity to the surface of the blade 1 as it moves relative to the beam, to cause the powder to melt in the laser beam and fuse to the blade surface.

The laser beam may be produced by any suitable laser source, such as a carbon dioxide laser with a power output of between about 1 and about 5 kilowatts. Conventional means for focussing the laser beam are provided in the apparatus.

In essence, the laser cladding process involves irradiating a portion of the blade surface with the laser beam, so that a relatively small molten pool of the superalloy of the blade surface is formed. The powdered alloy of the present invention is fed into the pool and dispersed therein at a rate of between about 0.1 and about 0.4 grams per second through a nozzle 16 of the apparatus via a stream of an inert gas such as argon. The powder particles fuse into the molten pool, which is then caused to solidify when the laser beam is moved away. The solidification of the molten pool if preferably effected rapidly, to minimise the formation of gamma prime phases in the alloy.

Figure 2 shows by arrows A the peripheral deposition line followed in the laser cladding process, by which an unfinished wall 4a of the deposited alloy composition of the present invention, typically about 0.2 mm thicker than the intended ultimate height of the intended finished wall 4, is initially laid down on the blade tip 3. In one example, the initial deposition may conventiently lay down an unfinished wall 4a of height about 0.7 mm.

After the initial deposition, the unfinished wall 4a is machined back to the desired height (e.g. about 0.5 mm) and configuration, using a conventional abrasion process. The cross-sectional profile of the resultant squealer is shown in Figure 4, in which numeral 16 represents the material of the blade and numeral 17 represents the deposited material of the novel alloy composition of the present invention.

It is found that the use of a laser cladding process for the laying down of the alloy composition of the present invention leads to a particularly shape-faithful deposition of the unfinished wall of the squealer.

### Industrial Applicability

The alloy, process and use of the present invention enables gas turbine blade tips to be formed with acceptable strength (particularly tensile and low cycle fatigue (LCF) strength), creep and high temperature oxidation and corrosion resistance properties, from an alloy composition which is cheaper than conventional alloys and can be deposited faster and more efficiently than conventional alloys, particularly when a laser cladding or weld deposition process is used.

More particularly, the alloy composition of the present invention makes available, in gas turbine blade tip structures, strengths exceeding half the strength of the nickel-based single crystal superalloys from which the turbine blade itself is cast, substantially greater than the strengths conventionally achievable through the use of thermal sprayed and machined MCrAlY overlay coatings for the blade tips, together with the processing advantages mentioned above.

Moreover, the same alloy can serve as a repair medium, in methods for repairing damage to a range of metal articles, particularly cast metal turbine components such as turbine blades, turbine shroud segments or nozzle guide vanes.

## Claims

1. A nickel alloy composition consisting of 4 to 8 wt% Cr, 5 to 6.5 wt% Al, 2 to 6 wt% Co, 4 to 8 wt% Ta, 3 to 5 wt% Re, 0.1 to 0.5 wt% Hf, 0.04 to 0.1 wt% C, 0.05 to 0.3 wt% Si, 0.003 to 0.01 wt% B, 0.003 to 0.008 wt% La and 0.003 to 0.008 wt % Y, and optionally one or more of: up to 5 wt % W up to 5 wt % Pt the balance being nickel, and incidental impurities and excluding all of Mo, Ti, V and Nb.

2. A nickel alloy composition, according to claim 1 and as defined by the nominal composition: Cr 4.5 wt%; A1 6 wt%; Co 4 wt%; Ta 6 wt%; Re 4 wt%; Hf 0.15 wt%; C 0.05 wt%; Si 0.1 wt%; B 0.005 wt%; W 2 wt%; La 0.003-0.005 wt%: and Y 0.003-0.005 wt%; the remainder being nickel.

3. The use of a nickel alloy composition as defined in any one of the preceding claims, for forming a blade tip of a gas turbine blade, particularly a blade tip of a gas turbine propulsion engine, to act as an oxidation and corrosion resistant barrier and optionally to provide the tip with rub tolerance,

4. A method for forming a blade tip of a gas turbine blade, particularly a blade tip of a gas turbine propulsion engine, the method comprising applying a nickel alloy composition as defined in claim 1 or 2 to the tip of the gas turbine blade.

5. A method for repairing a metal article, the method comprising applying a nickel alloy composition as defined in claim 1 or 2 to a damaged portion of the metal article to repair the same.

6. A method as claimed in claim 5, wherein the metal article is a cast metal turbine component.

7. A method as claimed in claim 6, wherein the cast metal turbine component is a turbine blade, a turbine shroud segment or a nozzle guide vane.

8. A method as claimed in any one of claims 4 to 7, wherein the application of the nickel alloy composition is carried out by a laser cladding or weld deposition process.

9. A method for forming a blade tip or blade tip structure of a gas turbine blade, or for forming a repair structure to repair a cast metal turbine component, the method comprising laser cladding or weld depositing a nickel alloy composition as defined in claim 1 or 2 to the tip of the gas turbine blade or to the cast metal turbine component, to a depth in excess of the desired blade tip or structure, and subsequently machining the nickel alloy composition to reduce the depth thereof to form the desired blade tip or structure.

10. A method as claimed in claim 9, wherein the nickel alloy composition is applied by laser cladding.

11. A method as claimed in claim 9 or claim 10, wherein the blade tip comprises a squealer.

## Patentansprüche

1. Nickellegierungszusammensetzung, bestehend aus 4 bis 8 Gew.-% Cr, 5 bis 6,5 Gew.-% Al, 2 bis 6 Gew.-% Co, 4 bis 8 Gew.-% Ta, 3 bis 5 Gew.-% Re, 0,1 bis 0,5 Gew.-% Hf, 0,04 bis 0,1 Gew.-% C, 0,05 bis 0,3 Gew.-% Si, 0,003 bis 0,01 Gew.-% B, 0,003 bis 0,008 Gew.-% La und 0,003 bis 0,008 Gew.-% Y, und wahlweise eines oder mehrere aus bis zu 5 Gew.-% W, bis zu 5 Gew.-% Pt, wobei der Rest Nickel ist, sowie zufällige Verunreinigungen, und ausgeschlossen alle aus Mo, Ti, V und Nb.

2. Nickellegierungszusammensetzung gemäß Anspruch 1, und definiert durch die nominale Zusammensetzung: Cr 4,5 Gew.-%; Al 6 Gew.-%; Co 4 Gew.-%; Ta 6 Gew.-%; Re 4 Gew.-%; Hf 0,15 Gew.-%; C 0,05 Gew.-%; Si 0,1 Gew.-%; B 0,005 Gew.-%; W 2 Gew.-%; La 0,003 bis 0,005 Gew.-%; und Y 0,003 bis 0,005 Gew.-%; wobei der Rest Nickel ist.

3. Verwendung einer Nickellegierungszusammensetzung aus irgendeinem der vorherigen Ansprüche zum Bilden einer Rotorspitze für einen Gasturbinenrotor, insbesondere einer Rotorspitze eines Antriebsmotors für eine Gasturbine, um als oxidations- und korrosionsfeste Schranke zu funktionieren und wahlweise um der Spitze Abriebfestigkeit zu verleihen.

4. Verfahren zum Bilden der Rotorspitze eines Gasturbinenrotors, insbesondere der Rotorspitze eines Antriebsmotors für eine Gasturbine, das Verfahren umfassend Auftragen einer Nickellegierungszusammensetzung aus Anspruch 1 oder 2 auf die Spitze des Gasturbinenrotors.

5. Verfahren zum Reparieren eines Metallgegenstands, das Verfahren umfassend Auftragen einer Nickellegierungszusammensetzung aus Anspruch 1 oder 2 auf einen beschädigten Teil des Metallgegenstands um diesen zu reparieren.

6. Verfahren gemäß Anspruch 5, worin der Metallgegenstand eine gegossene metallische Turbinenkomponente ist.

7. Verfahren gemäß Anspruch 6, worin die gegossene metallische Turbinenkomponente ein Rotorblatt, ein Mantelringsegment für eine Turbine oder eine Leitschaufel ist.

8. Verfahren gemäß irgendeinem der Ansprüche 4 bis 7, worin das Auftragen der Nickellegierungszusammensetzung mit einem Laserstrahlauftragsverfahren oder einem Schweißbeschichtungsverfahren erfolgt.

9. Verfahren zum Bilden einer Rotorspitze oder einer Rotorspitzenstruktur der Rotorspitze für eine Gasturbine, oder zum Bilden einer Reparierstruktur zum Reparieren einer gegossenen metallischen Turbinenkomponente, das Verfahren umfassend Laserstrahlauftragung oder Schweißbeschichtung einer Nickellegierungszusammensetzung aus Anspruch 1 oder 2 auf die Rotorspitze für die Gasturbine oder auf die gegossene metallische Turbinenkomponente, bis zu einer Tiefe über der gewünschten Rotorspitze oder Struktur, und anschließend Verarbeiten der Nickellegierungszusammensetzung, um ihre Tiefe zu verringern, um die gewünschte Rotorspitze oder Struktur zu bilden.

10. Verfahren gemäß Anspruch 9, worin die Nickellegierungszusammensetzung durch Laserstrahlauftragung aufgetragen wird.

11. Verfahren gemäß Anspruch 9 oder Anspruch 10, worin die Rotorspitze eine Schaufel umfasst.

## Revendications

1. Composition d'alliage de nickel constituée de 4 à 8 % en poids de Cr, 5 à 6,5 % en poids d'Al, 2 à 6 % en poids de Co, 4 à 8 % en poids de Ta, 3 à 5 % en poids de Re, 0,1 à 0,5 % en poids de Hf, 0,04 à 0,1 % en poids de C, 0,05 à 0,3 % en poids de Si, 0,003 à 0,01 % en poids de B, 0,003 à 0,008 % en poids de La et 0,003 à 0,008 % en poids de Y et, facultativement, d'un ou plusieurs éléments parmi : jusqu'à 5 % en poids de W, jusqu'à 5 % en poids de Pt, le reste étant du nickel et des impuretés éventuelles, à l'exclusion de tout Mo, Ti, V et Nb.

2. Composition d'alliage de nickel selon la revendication 1 et telle que définie par la composition nominale : Cr 4,5 % en poids ; Al 6 % en poids ; Co 4 % en poids ; Ta 6 % en poids ; Re 4 % en poids ; Hf 0,15 % en poids ; C 0,05 % en poids ; Si 0,1 % en poids ; B 0,005 % en poids ; W 2 % en poids ; La 0,003 à 0,005 % en poids ; et Y 0,003 à 0,005 % en poids ; le reste étant du nickel.

3. Utilisation d'une composition d'alliage de nickel telle que définie dans l'une quelconque des revendications précédentes, pour former une extrémité d'aube d'une aube de turbine à gaz, en particulier une extrémité d'aube d'un moteur de propulsion à turbine à gaz, pour faire office de barrière résistante à l'oxydation et à la corrosion et, facultativement, conférer à l'extrémité une tolérance aux frottements.

4. Procédé de formation d'une extrémité d'aube d'une aube de turbine à gaz, en particulier d'une extrémité d'aube d'un moteur de propulsion à turbine à gaz, le procédé comprenant l'application d'une composition d'alliage de nickel telle que défmie dans la revendication 1 ou 2 sur l'extrémité de l'aube de la turbine à gaz.

5. Procédé de réparation d'un article métallique, le procédé comprenant l'application d'une composition d'alliage de nickel telle que définie dans la revendication 1 ou 2 sur une partie endommagée de l'article métallique en vue de sa réparation.

6. Procédé tel que revendiqué dans la revendication 5, dans lequel l'article métallique est un composant de turbine en métal coulé.

7. Procédé tel que revendiqué dans la revendication 6, dans lequel le composant de turbine en métal coulé est une aube de turbine, un segment d'anneau de cerclage de la turbine, ou une aube directrice.

8. Procédé tel que revendiqué dans l'une quelconque des revendications 4 à 7, dans lequel l'application de la composition d'alliage de nickel se fait par un procédé de dépôt assisté par laser ou de dépôt par apport de soudage.

9. Procédé de formation d'une extrémité d'aube ou d'une structure d'extrémité d'aube d'une aube de turbine à gaz, ou de formation d'une structure de réparation pour réparer un composant de turbine en métal coulé, le procédé comprenant le dépôt assisté par laser ou le dépôt par apport de soudage d'une composition d'alliage de nickel telle que définie dans la revendication 1 ou 2 sur l'extrémité de l'aube de turbine à gaz ou sur le composant de turbine en métal coulé, sur une épaisseur supérieure à l'extrémité ou structure d'aube souhaitée, puis l'usinage de la composition d'alliage de nickel pour réduire son épaisseur afin de former l'extrémité ou la structure d'aube souhaitée.

10. Procédé selon la revendication 9, dans lequel la composition d'alliage de nickel est appliquée par dépôt assisté par laser.

11. Procédé selon la revendication 9 ou la revendication 10, dans lequel l'extrémité de l'aube comprend un bout aminci.
